# EUROPÄISCHE PATENTSCHRIFT

(11) **EP 3 384 755 B1**
(45) Veröffentlichungstag und Bekanntmachung des Hinweises auf die Patenterteilung: **10.06.2020**
(21) Anmeldenummer: 17164610.2
(22) Anmeldetag: 03.04.2017
(51) Int. Cl.: A01D 78/10, A01B 79/00, A01D 80/00

(54) **VERFAHREN ZUM STEUERN EINER LANDWIRTSCHAFTLICHEN MASCHINE BEIM SCHWADEN EINES ERNTEGUTS UND EINE ANORDNUNG MIT EINER LANDWIRTSCHAFTLICHEN MASCHINE**
METHOD FOR CONTROLLING AN AGRICULTURAL MACHINE WHEN WINDROWING A CROP AND ASSEMBLY WITH AN AGRICULTURAL MACHINE
PROCÉDÉ DE COMMANDE D'UNE MACHINE AGRICOLE LORS DE LA MISE EN ANDAINS D'UNE RÉCOLTE ET SYSTÈME COMPRENANT UNE MACHINE AGRICOLE

(43) Veröffentlichungstag der Anmeldung: 10.10.2018
(73) Patentinhaber: Kverneland Group Kerteminde AS, 5300 Kerteminde (DK)
(72) Erfinder: Pauli, Marco, 78256 Steißlingen (DE)
(74) Vertreter: Bittner, Thomas L.

(56) Entgegenhaltungen:
- EP-A1- 2 436 252
- EP-A2- 1 915 894
- WO-A1-2011/115477
- DE-A1-102006 020 009
- US-A- 5 995 902
- US-A- 6 104 979

## Beschreibung

Die Erfindung betrifft ein Verfahren zum Steuern einer landwirtschaftlichen Maschine beim Schwaden eines Ernteguts sowie eine Anordnung mit einer landwirtschaftlichen Maschine.

### Hintergrund

Beim Ernten von Nutzpflanzen in der Landwirtschaft kann vorgesehen sein, ein zuvor gemähtes oder geschnittenes Erntegut auf der landwirtschaftlichen Nutzfläche mithilfe eines Schwaders so zu verlegen oder zu schwaden, derart, dass auf der landwirtschaftlichen Nutzfläche Schwade hergestellt werden, entlang welcher das Erntegut dann angeordnet ist und aufgenommen werden kann, beispielsweise von einer Ballenpresse, einem Häcksler oder einem Ladewagen.

Schwader sind in verschiedenen Ausführungsformen als solche bekannt. Beispielsweise verfügen Schwader, die von einem Zugfahrzeug über die landwirtschaftliche Nutzfläche gezogen werden, über einen Tragrahmen, an dem mehrere Rechgeräte aufgenommen sind, beispielsweise in Form von Rechkreiseln. So sind für Schwader Ausführungen bekannt, bei denen eine Kombination von Rechgeräten, beispielsweise eine Kombination von Rechkreiseln, an dem Tragrahmen aufgenommen ist, derart, dass Rechgeräte paarweise zugeordnet und beidseitig eines mittleren Trägerbauteils des Tragrahmens angeordnet sind. Hierbei kann vorgesehen sein, dass in Fahrtrichtung vordere Rechgeräte quer zur Fahrtrichtung mit größerem Abstand zueinander angeordnet sind als in Fahrtrichtung hinten positionierte Rechgeräte. Beispielsweise ist ein Schwader mit vier Rechkreiseln bekannt.

Aus dem Dokument EP 2 436 252 A1 ist eine Vorrichtung zum Betreiben einer Rechkreiselaushubsteuerung bekannt. Die Rechkreiselaushubsteuerung für einen Mehrkreiselschwader weist wenigstens vier umlaufend angetriebene an Auslegarmen angelenkte Schwadkreisel auf, welche in der bodennahen Arbeitsstellung von Tast- und Stützrädern am Boden abgestützt am Boden liegendes Halmgut zusammenrechen und dadurch eine Schwad bilden und ablegen. Die Schwadkreisel können mittels Anheben der Auslegearme von einer bodennahen in eine bodenferne Transport- oder Zwischenstellung angehoben werden, wobei die Rechkreiselaushubsteuerung ein rechnergestütztes GPS-gesteuertes elektronisches System zur Schwadbildung aufweist und wobei der Mehrkreiselschwader wenigstens einen ersten GPS-Empfänger für eine rechnergestützte Rechkreiselaushubsteuerung zur Schwadbildung aufweist.

Vorrichtungen zum Schwaden sowie Verfahren zu deren Betrieb sind weiterhin aus folgenden Dokumenten bekannt: WO 2011/115477 A1, EP 1 915 894 A2, DE 10 2006 020 009 A1, US 5,995,902 und US 6,104,979.

### Zusammenfassung

Aufgabe der Erfindung ist es, ein Verfahren zum Steuern einer landwirtschaftlichen Maschine beim Schwaden eines Ernteguts auf einer landwirtschaftlichen Nutzfläche sowie eine Anordnung mit einer landwirtschaftlichen Maschine anzugeben, mit denen ein verbessertes Schwaden des Ernteguts für die nachfolgende Verarbeitung des Ernteguts ermöglicht ist.

Gelöst wird die Aufgabe durch ein Verfahren zum Steuern einer landwirtschaftlichen Maschine beim Schwaden eines Ernteguts auf einer landwirtschaftlich Nutzfläche sowie einer Anordnung mit einer landwirtschaftlichen Maschine nach den unabhängigen Ansprüchen 1 und 10. Alternative Ausgestaltungen sind Gegenstand von abhängigen Unteransprüchen.

Nach einem Aspekt ist ein Verfahren zum Steuern einer landwirtschaftlichen Maschine beim Schwaden eines Ernteguts auf einer landwirtschaftlichen Nutzfläche geschaffen. Das Verfahren umfasst das Bereitstellen einer landwirtschaftlichen Maschine mit einem Schwader, bei dem an einem Tragrahmen eine Kombination von Rechgeräten angeordnet ist, die eingerichtet sind, ein Erntegut auf der landwirtschaftlichen Nutzfläche zu schwaden. Die landwirtschaftliche Maschine mit dem Schwader wird auf der landwirtschaftlichen Nutzfläche bewegt, um hierbei das Erntegut zu schwaden. Die Rechgeräte werden im Schwadbetrieb mittels von einer Steuereinrichtung der landwirtschaftlichen Maschine erzeugten Steuersignalen gesteuert, wobei hierbei die Rechgeräte zum Schwaden eines ersten Abschnitts eines Schwads des Ernteguts mit einer ersten Schwadbreite einer ersten Betriebsart entsprechend gesteuert werden, wenn sich die landwirtschaftliche Maschine mit dem Schwader entlang eines im Wesentlichen geraden Fahrabschnitts bewegt. Die Rechgeräte werden zum Schwaden eines zweiten Abschnitts des Schwads mit einer zweiten Schwadbreite, die geringer als die erste Schwadbreite ist, einer zweiten Betriebsart entsprechend gesteuert, wenn sich die landwirtschaftliche Maschine mit dem Schwad entlang eines gekrümmten Fahrabschnitts bewegt.

Nach einem weiteren Aspekt ist eine Anordnung mit einer landwirtschaftlichen Maschine zum Schwaden eines Ernteguts auf einer landwirtschaftlichen Nutzfläche geschaffen, welcher einen Schwader aufweist, bei dem an einem Traggestell eine Kombination von Rechgeräten angeordnet ist, die eingerichtet sind, ein Erntegut auf der landwirtschaftlichen Nutzfläche zu schwaden, und einer Steuereinrichtung, wobei die Anordnung eingerichtet ist, beim Schwaden des Ernteguts auf der landwirtschaftlichen Nutzfläche mittels der landwirtschaftlichen Maschine das Verfahren zum Schwaden auszuführen.

Beim Schwaden wird ein Schwad gebildet, in welchem das Erntegut auf der landwirtschaftlichen Nutzfläche abgelegt ist.

Es ist vorgesehen, die Schwadbreite des beim Fahren des Schwaders über die landwirtschaftliche Nutzfläche mithilfe der Rechgeräte erzeugten Schwads im Bereich gekrümmter Fahr- oder Fahrbahnabschnitte (Kurvenfahrt) im Vergleich zur Schwadbreite auf geraden Fahrabschnitten zu mindern. Hierdurch ist es beispielsweise ermöglicht, das ein Schwad mit optimiertem Verlauf der Schwadbreite bereitgestellt werden kann, dahingehend, dass die Schwadbreite eine optimale Ausnutzung der Ladebreite einer landwirtschaftlichen Vorrichtung ermöglicht, die später genutzt wird, um das Erntegut aus dem Schwad aufzunehmen. Die effektive Aufnahmebreite der landwirtschaftlichen Vorrichtung zum Aufnehmen des Ernteguts aus dem Schwad verringert sich in Abhängigkeit davon, ob ein gerader oder ein gekrümmter Fahrabschnitt durchfahren wird. Für die hierbei vorgesehene Aufnahme des Ernteguts, beispielsweise durch eine Ballenpresse, einen Häcksler oder einen Last- und Transportwagen, kann die Schwadbreite mit den hier vorgeschlagenen Technologien angepasst werden. Die Breitenanpassung für den Schad erfolgt, indem die Rechgeräte in unterschiedlichen Betriebsarten betrieben werden. Die Betriebsarten der Rechgeräte können sich dadurch unterscheiden, dass ein oder mehrere der Rechgeräte in den verschiedenen Betriebsarten andere Betriebs- oder Arbeitsstellungen aufweist, beispielsweise betreffend den Abstand eines Rechgeräts vom Tragrahmen und / oder den Bodenabstand.

Die Steuereinrichtung verarbeitet zum Steuern der Rechgeräte elektronische Fahrdaten, welche anzeigen, dass die landwirtschaftliche Maschine mit dem Schwader in den gekrümmten Fahrabschnitt einfährt und / oder sich auf dem gekrümmten Fahrabschnitt bewegt. Die Steuereinrichtung bestimmt aus den elektronischen Fahrdaten, wann die landwirtschaftliche Maschine mit dem Schwader in den gekrümmten Fahrabschnitt einfährt und oder sich auf diesem bereits befindet. Als Reaktion hierauf werden die Steuersignale für die Rechgeräte erzeugt und an die Rechgeräte gegeben, um den Betriebsartwechsel zu bewirken, also die Schwadbreite zu mindern im Vergleich zur Schwadbreite in einem zuvor durchfahrenen gerade Fahrabschnitt. In vergleichbarer Weise können die elektronischen Fahrdaten optional ausgearbeitet oder verarbeitet werden, um als Reaktion hierauf die Schwadbreite wieder zu verbreitern, wenn der gekrümmte Fahrabschnitt abschließend durchfahren wurde und sich die landwirtschaftliche Maschine mit dem Schwader wieder auf einem geraden Fahrabschnitt befindet.

Das Verfahren kann Folgendes vorsehen: Bestimmen von ersten elektronischen Fahrdaten, die eine momentane Position der landwirtschaftlichen Maschine auf der landwirtschaftlichen Nutzfläche anzeigen, indem beim Bewegen der landwirtschaftlichen Maschine mit dem Schwader auf der landwirtschaftlichen Nutzfläche wiederholt Maschinen-Positionsdaten für die landwirtschaftliche Maschine mittels eines Positionsbestimmungssystem bestimmt werden, die die momentane Position der landwirtschaftlichen Maschine auf der landwirtschaftlichen Nutzfläche anzeigen, und Verarbeiten der ersten elektronische Fahrdaten, um zu bestimmen, ob die landwirtschaftliche Maschine mit dem Schwader in den gekrümmten Fahrabschnitt einfährt und / oder sich auf dem gekrümmten Fahrabschnitt bewegt. Die momentane Position der landwirtschaftlichen Maschine kann wiederholt bestimmt werden mithilfe des Positionsbestimmungssystems, welches beispielsweise ein Positionsbestimmungssystem auf Basis des GPS-Systems sein kann. In einer Ausführungsform kann aus den Maschinen-Positionsdaten selbst bestimmt werden, wann ein gerader oder ein gekrümmter Fahrabschnitt durchfahren und / oder wann ein solcher Abschnitt verlassen wird. Hierzu kann zum Beispiel ein sich aus den Maschinen-Positionsdaten ergebender Kurvenverlauf bestimmt werden. Alternativ oder ergänzend kann vorgesehen sein, die momentan bestimmten Maschinen-Positionsdaten mit in einem Speicher hinterlegten geografischen Daten für die landwirtschaftliche Nutzfläche zu vergleichen, um aus dem Vergleich zu bestimmen, wann von der landwirtschaftlichen Maschine ein gekrümmter Fahrabschnitt zu durchfahren ist, beispielsweise im Eckbereich der landwirtschaftlichen Nutzfläche. Die geografischen Daten können lokal in einem elektronischen Speicher der landwirtschaftlichen Maschine und / oder in einer zentralen Servereinrichtung hinterlegt sein. Für einen Datenaustausch mit der zentralen Servereinrichtung kann die landwirtschaftliche Maschine eine Sende-EmpfangsEinrichtung aufweisen, die für eine drahtlose Datenkommunikation eingerichtet ist.

Das Verfahren kann weiterhin Folgendes vorsehen: Bestimmen von zweiten elektronischen Fahrdaten, die Lenkinformationen betreffend eine Lenkung der landwirtschaftlichen Maschine anzeigen, und Verarbeiten der zweiten elektronischen Fahrdaten, um zu bestimmen, ob die landwirtschaftliche Maschine mit dem Schwader in den gekrümmten Fahrabschnitt einfährt und / oder sich auf dem gekrümmten Fahrabschnitt bewegt. Alternativ oder ergänzend zum Verarbeiten der Maschinen-Positionsdaten können mithilfe einer zugeordneten Sensoreinrichtung elektronische Lenkinformationen für eine Lenkung der landwirtschaftlichen Maschine erfasst werden, beispielsweise die Lenkung eines Traktors, der den Schwader zieht. Die Lenkinformationen zeigen an, wenn der gekrümmte Fahrabschnitt durchfahren wird und können so ausgewertet werden, um die Rechgeräte mit der verminderten Schwadbreite zu betrieben. Alternativ oder ergänzend kann elektronische Lenkinformation von einer Zwangslenkung erfasst und zur Steuerung herangezogen werden, wie diese als solche beispielsweise für eine Heuwerbungsmaschine im Dokument EP 1 364 573 B1 offenbart ist. Ein Sensor am Anbaubock des Schwaders kann detektieren, wenn der Traktor eine Kurve fährt.

Die von der Steuereinrichtung erzeugten Steuersignale können die Rechgeräte steuern, den Schwad im zweiten Schwadabschnitt mit einer Einschnürung hinsichtlich der Schwadbreite herzustellen. Mittels der Einschnürung oder einer lokalen Verengung der Schwadbreite kann in dem gekrümmten Fahrabschnitt ein Schwadverlauf hergestellt werden, bei dem die Schwadbreite vom Beginn des gekrümmten Fahrabschnitts ausgehend zur Einschnürung hin abnimmt, um danach von der Einschnürung zum Ende des gekrümmten Fahrabschnitts wieder zuzunehmen. Bei dieser oder anderen Ausführungsformen kann die geringste Schwadbreite im Scheitelpunkt des gekrümmten Fahrabschnitts hergestellt werden. Allgemein kann die Schwadbreite im Verlauf des gekrümmten Fahrabschnitts in einem mittleren Bereich geringer sein als in den beiden Endbereichen des gekrümmten Fahrabschnitts.

Die von der Steuereinrichtung erzeugten Steuersignale können die Rechgeräte steuern, den Schwad in der zweiten Betriebsart bis auf eine zweite Schadbreite zu verringern, die wenigstens etwa 15% geringer als die erste Schwadbreite ist. Hierbei kann vorgesehen sein, dass die Schwadbreite vom Beginn des gekrümmten Fahrabschnitts ausgehend allmählich auf den geminderten Wert verringert wird. Ein ähnlicher Übergang kann für die Schwadbreiten auch vor oder bei dem Verlassen des gekrümmten Fahrabschnitts vorgesehen sein.

In der Steuereinrichtung können verschiedenen Betriebsmodi hinterlegt sein, zum Beispiel eine oder mehrere der folgenden Betriebsarten:
- Modus "Presse": Schwadbreite wird um etwa 30 bis 40%, insbesondere um etwa 35% reduziert, abhängig vom Kurvenwinkel (0° entspricht 0%, 90° entspricht 40% oder 35%);
- Modus "Ladewagen": Schwadbreite wird um etwa 20 bis 30%, insbesondere um etwa 25% reduziert (0° entspricht 0%, 90° entspricht 30% oder 25%);
- Modus "Häcksler": Schwadbreite wird um etwa 10 bis 20%, insbesondere um etwa 15% reduziert, abhängig vom Kurvenwinkel (0° entspricht 0%, 90° entspricht 20% oder 15%).

Der Kurvenwinkel gibt den Winkel an, welcher durch die Fahrtrichtung am Kurvenanfang und am Kurvenende bestimmt ist.

Das Verfahren kann Folgendes vorsehen: beim Verarbeiten der elektronischen Fahrdaten wird ein Maß für eine Krümmung des gekrümmten Fahrabschnitts bestimmt, und die zweite Schwadbreite wird in Abhängigkeit von dem Maß für die Krümmung bestimmt. Während in einer einfachen Ausführungsform die Minderung der Schwadbreite in dem gekrümmten Fahrabschnitt allein auf Grund des Bestimmens, dass ein gekrümmter Fahrabschnitt durchfahren wird, erfolgen kann, ist bei dieser Ausführungsform vorgesehen, ein Maß für die Krümmung im gekrümmten Fahrabschnitt zu bestimmen und in Abhängigkeit hiervon die Minderung der Schwadbreite vorzunehmen. Als Maß für die Krümmung kann beispielsweise ein Kurvenradius bestimmt werden. Auch ein Grad des Lenkeinschlags alternativ oder ergänzend kann als Maß herangezogen werden. Für verschiedene Kurvenradien kann eine unterschiedliche Reduzierung der Schwadbreite gegenüber der Schwadbreite in dem geraden Fahrabschnitt vorgesehen sein.

Das Verfahren kann weiterhin Folgendes aufweisen: in der Steuereinrichtung werden Maschinendaten für eine andere landwirtschaftliche Maschine bereitgestellt, die für ein nachträgliches Aufnehmen des Ernteguts aus dem Schwad vorgesehen ist, und die Steuereinrichtung bestimmt die zweite Schwadbreite in Abhängigkeit von den Maschinendaten. Die für die andere landwirtschaftliche Maschine bereitgestellten Maschinendaten können beispielsweise eine Breite einer Aufnahmeeinrichtung der anderen landwirtschaftlichen Maschine angeben, wobei die Aufnahmeeinrichtung dazu dient, das Erntegut aus dem hergestellten Schwad aufzunehmen (Erntegutbergung), beispielsweise mittels einer Presse wie einer Ballenpresse, eines Häckslers oder eines Last- und Transportwagens. Diese verfügen regelmäßig über eine Aufnahmeeinrichtung, um das Erntegut aus dem Schwad aufzunehmen, beispielsweise für das Pressen eines Ballens oder den Transport des Ernteguts, wobei sich die Aufnahmeeinrichtung beim Aufnehmen des Ernteguts üblicherweise quer zur Fahrtrichtung erstreckt. Die Informationen zur Breite der Aufnahmeeinrichtung können alternativ oder ergänzend für die Steuerung der Rechgerät in dem geraden Fahrabschnitt ausgewertet werden, dahingehend, dass die Schwadbreite in dem geraden Fahrabschnitt in Abhängigkeit von der Breite der Aufnahmeeinrichtung gesteuert wird.

Das Steuern der Rechgeräte kann in der ersten und der zweiten Betriebsart ein Verändern der Arbeitsstellung eines oder mehrerer der Rechgeräte umfassen, wobei das eine oder die mehreren Rechgeräte hierbei zwischen einer angehobenen Nichtarbeitsstellung sowie einer abgesenkten Arbeitsstellung und / oder, in Bezug auf den Tragrahmen, zwischen einer proximalen sowie einer distalen Arbeitsstellung verlagert werden. Für die Rechgeräte kann ein Verlagern in verschiedene Arbeitsstellungen vorgesehen sein, die durch einen unterschiedlichen Abstand von dem Tragrahmen charakterisiert sind. Alternativ oder ergänzend können sich die Arbeitsstellungen hinsichtlich des Abstands zum Boden unterscheiden, so dass bodennahe und bodenferne Arbeitsstellungen eingenommen werden können. Die Rechkreisel werden eingestellt durch Ein- und Ausfahren der hinteren Kreisel. Der Abstand der hinteren Rotoren proximal und distal ist relevant, nicht die Aggressivität der Rechkreisel Einstellungen.

Die Steuereinrichtung kann die Rechgeräte zum Schwaden eines dritten Abschnitts des Schwads, welcher sich an den zweiten Schwadabschnitt anschließt, mit einer dritten Schwadbreite einer dritten Betriebsart entsprechend steuern, wenn sich die landwirtschaftliche Maschinen mit dem Schwader im Anschluss an der gekrümmten Fahrabschnitt einen im Wesentlichen weiteren gerade Fahrabschnitts bewegt, wobei die dritte Schwadbreite größer als die zweite Schwadbreite ist. Die Schwadbreite im dritten Abschnitt des Schwads kann gleich der ersten Schwadbreite sein. Alternativ kann die dritte Schwadbreite von der ersten Schwadbreite verschieden sein.

Die vorangehend in Verbindung mit dem Verfahren beschriebenen Ausgestaltungen können einzeln oder in beliebiger Kombination im Zusammenhang mit der Anordnung mit der landwirtschaftlichen Maschine zum Schaden entsprechend vorgesehen sein.

### Beschreibung von Ausführunasbeispielen

Im Folgenden werden weitere Ausführungsbeispiele unter Bezugnahme auf Figuren einer Zeichnung näher erläutert. Hierbei zeigen:
- Fig. 1: eine schematische Darstellung eines Schwaders mit vier Rechgeräten, die als Rechkreisel ausgeführt sind von oben;
- Fig. 2: eine schematische Darstellung des Schwaders aus Fig. 1 von vorn;
- Fig. 3: eine schematische Blockdarstellung von funktionellen Komponenten zum Nutzen und Steuern des Schwaders und
- Fig. 4: eine schematische Darstellung eines in einem gekrümmten Kurvenabschnitt mit geringerer Breite gebildeten Schwads sowie einem das Erntegut aus dem Schwad aufnehmenden Last- und Transportwagen.

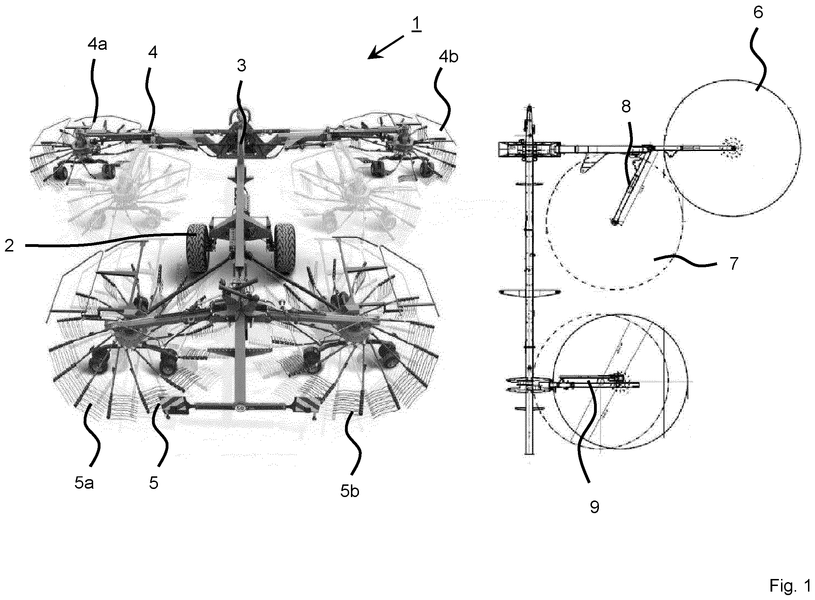

Fig. 1 zeigt eine schematische Darstellung eines Schwaders 1, bei dem an einem Radgestell 2 ein Tragrahmen 3 aufgenommen ist. An dem Tragrahmen 3 sind vordere und hintere Rechgeräte 4, 5 angeordnet, die paarweise gebildet sind. Einander zugeordnete Rechgeräte 4a, 4b sowie 5a, 5b sind bei der gezeigten Ausführungsform als Rechkreisel ausgestaltet. Die Rechkreisel können unabhängig voneinander hinsichtlich ihrer momentane Stellung gesteuert werden. Mithilfe des Schwaders 1 kann ein auf einer landwirtschaftlichen Nutzfläche verteiltes Erntegut geschwadet werden, wobei der Schwader 1 hierbei mit einem Zugfahrzeug (nicht dargestellt) über die landwirtschaftliche Nutzfläche bewegt wird. Schwader 1 und Zugfahrzeug sind dann teil einer landwirtschaftlichen Maschine, die im alternativen Fall eines selbstfahrenden Schwaders auch von diesem gebildet sein kann.

Wie sich aus der Fig. 1 ergibt, können zumindest die vorderen Rechgeräte 4a, 4b mittels Schwenken zwischen einer in Bezug auf den Tragrahmen 3 distalen Arbeitsstellung 6 und einer proximalen Arbeitsstellung 7 verlagert werden, indem ein Schwenkarm 8 um eine sich vertikal erstreckende Schwenkachse verschwenkt wird. (Auch die hinteren Rechkreisel 5a und 5b können hin und her bewegt werden.)

Darüber hinaus sind die vorderen und die hinteren Rechgeräte 4a, 4b, 5a, 5b jeweils aus der in Fig. 1 gezeigten Arbeitsstellung in eine Nichtarbeitsstellung verlagerbar (nicht dargestellt), in welcher die Rechgeräte 4a, 4b, 5a, 5b nach oben verlagert sind, sodass in der Nichtarbeitsstellung eine Bearbeitung des Ernteguts zum Schwaden nicht möglich ist. Hierbei kann es sich um eine Transportstellung handeln.

Auch die hinteren Rechgeräte 5a, 5b können hinsichtlich ihres Abstands zum Tragrahmen 3 verstellt werden, um verschiedene Arbeitsstellungen einzunehmen, indem ein Tragarm 9 verlängert und verkürzt wird.

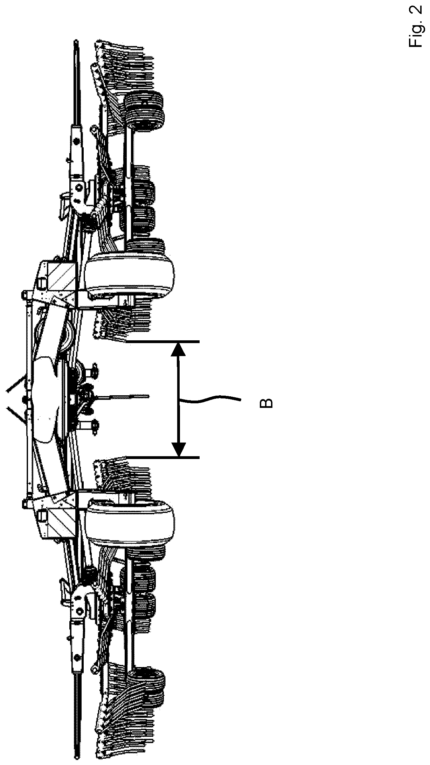

Fig. 2 zeigt den Schwader 1 aus Fig. 1 von vorn, wobei eine Schwadbreite B angezeigt ist.

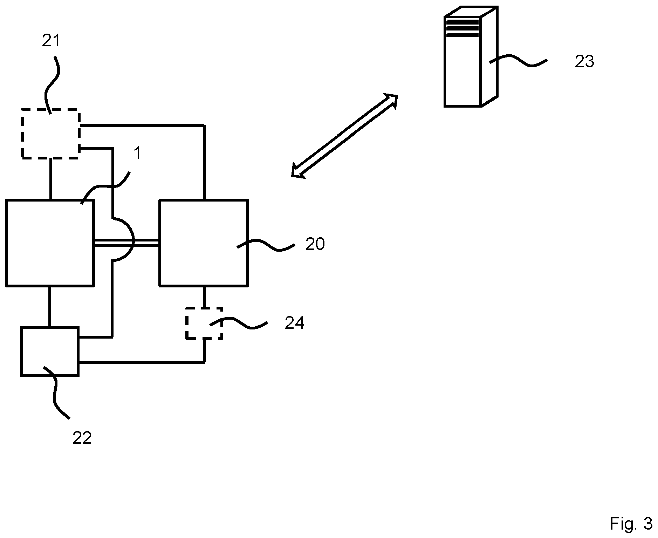

Fig. 3 eine schematische Blockdarstellung von funktionellen Komponenten einer Anordnung mit zum Nutzen und Steuern des Schwaders 1. Der Schwader 1 koppelt an ein Zugfahrzeug 20, mit dem der Schwader 1 über die landwirtschaftliche Nutzfläche bewegt wird. Vorgesehen ist wahlweise weiterhin ein optionales Positionsbestimmungssystem 21, mit dem beim Bewegen des Schwaders 1 über die landwirtschaftliche Nutzfläche fortdauernd eine lokale Position bestimmt werden können. Die lokale Position kann bezogen auf den Schwader 1 und / oder das Zugfahrzeug 20 bestimmt werden, wobei hierbei ein Abstand zwischen Schader 1 und Zugfahrzeug 20 berücksichtigt werden kann. Das Positionsbestimmungssystem 21 kann beispielsweise ein satellitengestütztes Navigationssystem sein.

Eine Steuereinrichtung 22 ist zum Austausch von elektronischen Daten mit dem Schwader 1 und wahlweise dem Positionsbestimmungssystem 21 verbunden. Auf diese Weise können in der Steuereinrichtung 22 Steuersignale erzeugt und an den Schwader 1 gegeben werden. Mittels der Steuersignale werden insbesondere die Rechgeräte 4a, 4b, 5a, 5b hinsichtlich ihrer Arbeitsstellung gesteuert. Hierzu können den Rechgeräten 4a, 4b, 5a, 5b einzeln oder in Gruppen lokale Steuereinrichtung oder -einheiten zugeordnet sein, die die Steuersignale verarbeiten, um die Rechgeräte 4a, 4b, 5a, 5b für das Erzeugen der fahrabschnittsabhängigen Schwadbreite einzustellen.

Die verschiedenen Funktionskomponenten können wahlweise Daten mit einer zentralen Servereinrichtung 23 austauschen, welche eine Datenbank aufweisen kann.

In einer alternativen Ausführungsform werden mithilfe des Positionsbestimmungssystems 21 fortdauernd Maschinen-Positionsdaten für den Schwader 1 auf der landwirtschaftlichen Nutzfläche erfasst und mit Positionsinformationen verglichen, die einen Teilbereich der landwirtschaftlichen Nutzfläche betreffen, auf welcher das zu schwadende Erntegut verteilt ist. Hiervon ausgehend werden in der Steuereinrichtung 22 Steuersignale erzeugt, um die Rechgeräte 4a, 4b, 5a, 5b zum Erfassen (Schwaden) des Ernteguts zu steuern, indem insbesondere das vordere Rechgerät 4b zwischen der distalen und der proximalen Stellung 7, 8 und wahlweise hierzwischen angeordneten weiteren Stellungen verlagert wird.

Gemäß Fig. 3 ist optional eine Einheit 24 vorgesehen, die dem Erfassen von Lenkinformationen für die Lenkung des Zugfahrzeugs 20 dient, woraus bestimmt werden kann, ob der Schwader 1 einen geraden oder einen gekrümmten Fahrabschnitt durchfährt.

Um die Schwadbreite in Kurven zu reduzieren, kann das kurvenäußere, hintere Rechgerät nach innen verschoben werden. Das Verschieben des kurvenäußeren Rechgeräts kann eine gewünschte Überlappung zwischen Front- und Heckrotor sicherstellen. Die reduzierte Schwadbreite kann so individuell auf den nachfolgenden Arbeitsgang der Futterbergung angepasst werden. Die Schwadbreite kann hierbei von der Art des nachfolgenden zur Erntegutbergung verwendeten Fahrzeugs abhängen (zum Beispiel Presse, Ladewagen, Häcksler).

In der Steuereinrichtung 22 können verschiedene Betriebsmodi hinterlegt sein, zum Beispiel eine oder mehrere der folgenden Betriebsarten:
- Modus "Presse": Schwadbreite wird um etwa 30 bis 40%, insbesondere um etwa 35% reduziert, abhängig vom Kurvenwinkel (0° entspricht 0%, 90° entspricht 40% oder 35%)
- Modus "Ladewagen": Schwadbreite wird um etwa 20 bis 30%, insbesondere um etwa 25% reduziert (0° entspricht 0%, 90° entspricht 30% oder 25%)
- Modus "Häcksler": Schwadbreite wird um etwa 10 bis 20%, insbesondere um etwa 15% reduziert, abhängig vom Kurvenwinkel (0° entspricht 0%, 90° entspricht 20% oder 15%)

Die unterschiedlichen Modi werden bestimmt nach den gegebenen Geometrien der Fahrzeuge: Presse - Schmale Pickup, Abstand Anhängepunkt /Achse klein; Ladewagen - Mittelbreite Pickup, Abstand Anhängepunkt / Achse groß; Häcksler - Breite Pickup (Aufnahme), lenkbare Achse am Heck. Jeweiligen Grundeinstellungen für Aufnahmebreite und Abstand Anhängepunkt / Achse können in einem Einstellungsmenü angepasst werden, zum Beispiel einem Bedienterminal im Zugfahrzeug 20, welches mit der Steuereinrichtung 22 verbunden ist.

Die beschriebenen Betriebsarten können bei dem in Fig. 1 und 2 gezeigten Schwader 1 aber auch bei Schwadern anderer Bauart Anwendung finden.

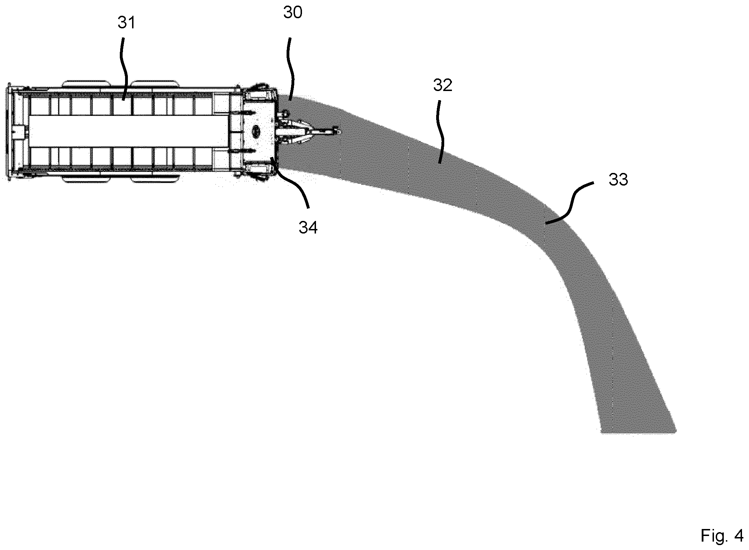

Fig. 4 zeigt eine schematische Darstellung eines Schwads 30 eines Ernteguts sowie einen das Erntegut aus dem Schwad 30 aufnehmenden Last- und Transportwagen 31, der zum Aufnehmen des Ernteguts von der landwirtschaftlichen Nutzfläche mit einem Traktor (nicht dargestellt) gezogen wird. Dargestellt ist ein gekrümmter Kurvenabschnitt 32 in welchem sich die Schwadbreite des Schwads 30 verringert. Die geringste Schwadbreite ist hierbei in einem mittleren Abschnitt 33 des Schwads 30 vorgesehen. Der Verlauf der Schwadbreite in dem gekrümmten Kurvenabschnitt ermöglicht es, die Breite einer Aufnahmeeinrichtung 34 am vorderen Teil des Last- und Transportwagens optimal auszunutzen, auch beim Durchfahren des gekrümmten Kurven-Fahrabschnitts. Zur Ausbildung des Verlaufs der Schwadbreite werden die Arbeitsstellungen der vorderen und der hinteren Rechgeräte 4, 5 entsprechend gesteuert, beispielsweise in Abhängigkeit von momentanen oder aktuellen Positionsdaten, die mithilfe des Positionsbestimmungssystems 21 bestimmt werden.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Steuern einer landwirtschaftlichen Maschine beim Schwaden eines Ernteguts auf einer landwirtschaftlichen Nutzfläche, aufweisend:
- Bereitstellen einer landwirtschaftlichen Maschine mit einem Schwader (1), bei dem an einem Tragrahmen (3) eine Kombination von Rechgeräten (4, 5) angeordnet ist, die eingerichtet sind, ein Erntegut auf einer landwirtschaftlichen Nutzfläche zu schwaden;
- Bewegen der landwirtschaftlichen Maschinen mit dem Schwader (1) auf der landwirtschaftlichen Nutzfläche, um hierbei das Erntegut zu schwaden; und
- Steuern der Rechgeräte (4, 5) im Schwadbetrieb mittels von einer Steuereinrichtung der landwirtschaftlichen Maschine erzeugten Steuersignalen;
**dadurch gekennzeichnet, dass**
- die Rechgeräte (4, 5) zum Schwaden eines ersten Abschnitts eines Schwads des Ernteguts mit einer ersten Schwadbreite einer ersten Betriebsart entsprechend gesteuert werden, wenn sich die landwirtschaftliche Maschine mit dem Schwader (1) entlang eines im Wesentlichen gerade Fahrabschnitts bewegt;
- die Rechgeräte (4, 5) zum Schwaden eines zweiten Abschnitts des Schwads mit einer zweiten Schwadbreite, die geringer als die erste Schwadbreite ist, einer zweiten Betriebsart entsprechend gesteuert werden, wenn sich die landwirtschaftliche Maschine mit dem Schwader (1) entlang eines gekrümmten Fahrabschnitts bewegt; und
- die Steuereinrichtung zum Steuern der Rechgeräte (4, 5) elektronische Fahrdaten verarbeitet, welche anzeigen, dass die landwirtschaftliche Maschine mit dem Schwader (1) in den gekrümmten Fahrabschnitt einfährt und / oder sich auf dem gekrümmten Fahrabschnitt bewegt.

2. Verfahren nach Anspruch 1, **gekennzeichnet durch**
- Bestimmen von ersten elektronischen Fahrdaten, die eine momentane Position der landwirtschaftlichen Maschine auf der landwirtschaftlichen Nutzfläche anzeigen, indem beim Bewegen der landwirtschaftlichen Maschine mit dem Schwader (1) auf der landwirtschaftlichen Nutzfläche wiederholt Maschinen-Positionsdaten für die landwirtschaftliche Maschine mittels eines Positionsbestimmungssystem bestimmt werden, die die momentane Position der landwirtschaftlichen Maschine auf der landwirtschaftlichen Nutzfläche anzeigen; und
- Verarbeiten der ersten elektronische Fahrdaten, um zu bestimmen, ob die landwirtschaftliche Maschine mit dem Schwader (1) in den gekrümmten Fahrabschnitt einfährt und / oder sich auf dem gekrümmten Fahrabschnitt bewegt.

3. Verfahren nach Anspruch 2 oder 3, **gekennzeichnet durch**
- Bestimmen von zweiten elektronischen Fahrdaten, die Lenkinformationen betreffend eine Lenkung der landwirtschaftlichen Maschine anzeigen; und
- Verarbeiten der zweiten elektronischen Fahrdaten, um zu bestimmen, ob die landwirtschaftliche Maschine mit dem Schwader (1) in den gekrümmten Fahrabschnitt einfährt und / oder sich auf dem gekrümmten Fahrabschnitt bewegt.

4. Verfahren nach mindestens einem der vorangehenden Ansprüche, **dadurch gekennzeichnet, dass** die von der Steuereinrichtung erzeugten Steuersignale die Rechgeräte (4, 5) steuern, den Schwad im zweiten Schwadabschnitt mit einer Einschnürung hinsichtlich der Schwadbreite herzustellen.

5. Verfahren nach mindestens einem der vorangehenden Ansprüche, **dadurch gekennzeichnet, dass** die von der Steuereinrichtung erzeugten Steuersignale die Rechgeräte (4, 5) steuern, den Schwad in der zweiten Betriebsart bis auf eine zweite Schadbreite zu verringern, die wenigstens etwa 20% geringer als die erste Schwadbreite ist.

6. Verfahren nach mindestens einem der vorangehenden Ansprüche, soweit auf Anspruch 2 rückbezogen, **dadurch gekennzeichnet, dass**
- beim Verarbeiten der elektronischen Fahrdaten ein Maß für eine Krümmung des gekrümmten Fahrabschnitts bestimmt wird und
- die zweite Schwadbreite in Abhängigkeit von dem Maß für die Krümmung bestimmt wird.

7. Verfahren nach mindestens einem der vorangehenden Ansprüche, **dadurch gekennzeichnet, dass**
- in der Steuereinrichtung Maschinendaten für eine andere landwirtschaftliche Maschine bereitgestellt werden, die für ein nachträgliches Aufnehmen des Ernteguts aus dem Schwad vorgesehen ist; und
- die Steuereinrichtung die zweite Schwadbreite in Abhängigkeit von den Maschinendaten bestimmt wird.

8. Verfahren nach mindestens einem der vorangehenden Ansprüche, **dadurch gekennzeichnet, dass** das Steuern der Rechgeräte (4, 5) in der ersten und der zweiten Betriebsart ein Verändern der Arbeitsstellung eines oder mehrerer der Rechgeräte (4, 5) umfasst, wobei das eine oder die mehreren Rechgeräte (4, 5) hierbei zwischen einer angehobenen Nichtarbeitsstellung sowie einer abgesenkten Arbeitsstellung und / oder, in Bezug auf den Tragrahmen, zwischen einer proximalen sowie einer distalen Arbeitsstellung verlagert werden.

9. Verfahren nach mindestens einem der vorangehenden Ansprüche, **dadurch gekennzeichnet, dass** die Steuereinrichtung die Rechgeräte (4, 5) zum Schwaden eines dritten Abschnitts des Schwads, welcher sich an den zweiten Schwadabschnitt anschließt, mit einer dritten Schwadbreite einer dritten Betriebsart entsprechend steuert, wenn sich die landwirtschaftliche Maschinen mit dem Schwader (1) im Anschluss an der gekrümmten Fahrabschnitt einen im Wesentlichen weiteren gerade Fahrabschnitts bewegt, wobei die dritte Schwadbreite größer als die zweite Schwadbreite ist.

10. Anordnung mit einer landwirtschaftlichen Maschine zum Schwaden eines Ernteguts auf einer landwirtschaftlichen Nutzfläche, welche einen Schwader (1) aufweist, bei dem an einem Traggestell eine Kombination von Rechgeräten (4, 5) angeordnet ist, die eingerichtet sind, ein Erntegut auf einer landwirtschaftlichen Nutzfläche zu schwaden, und einer Steuereinrichtung, wobei die Anordnung eingerichtet ist, beim Schwaden des Ernteguts auf der landwirtschaftlichen Nutzfläche mittels der landwirtschaftlichen Maschine gemäß einem Verfahren nach mindestens einem der vorangehenden Ansprüche gesteuert zu werden.

## Claims

1. A method for controlling an agricultural machine when collecting a harvested crop into swaths on agricultural land, said method having the following steps:
- providing an agricultural machine having a rake (1) in which a combination of raking devices (4, 5) is arranged on a support frame (3), which raking devices (4, 5) are designed to collect a harvested crop into swaths on agricultural land;
- moving the agricultural machine having the rake (1) on the agricultural land in order to collect the harvested crop into swaths; and
- controlling the raking devices (4, 5) during the collection process by means of control signals generated by a control device of the agricultural machine;
**characterized in that**
- the raking devices (4, 5) are controlled to collect a first section of a swath of the crop with a first swath width according to a first mode of operation, when the agricultural machine having the rake (1) travels along an essentially straight section of travel;
- the raking devices (4, 5) are controlled to collect a second section of the swath with a second swath width which is less than the first swath width according to a second mode of operation, when the agricultural machine having the rake (1) travels along a curved section of travel; and
- the control device, in order to control the raking devices (4, 5), processes electronic travel data, which indicate that the agricultural machine having the rake (1) is entering the curved section of travel and/or is moving along the curved section of travel.

2. The method according to Claim 1, **characterized by** the following steps:
- determining first electronic driving data indicating a current position of the agricultural machine on the agricultural land by repeatedly determining machine position data for the agricultural machine by means of a positioning system indicating the current position of the agricultural machine on the agricultural land while moving the agricultural machine with the rake (1) on the agricultural land; and
- processing the first electronic driving data to determine whether the agricultural machine having the rake (1) is entering the curved section of travel and/or is moving on the curved section of travel.

3. The method according to Claim 2 or 3, **characterized by** the following steps:
- determining second electronic driving data indicating steering information relating to the steering of the agricultural machine; and
- processing the second electronic driving data to determine whether the agricultural machine having the rake (1) is entering the curved section of travel and/or is moving on the curved section of travel.

4. The method according to at least one of the preceding claims, **characterized in that** the control signals generated by the control device control the raking devices (4, 5) to produce the swath in the second swath section with a constriction regarding the swath width.

5. The method according to at least one of the preceding claims, **characterized in that** the control signals generated by the control device control the raking devices (4, 5) to reduce the swath to a second swath width, which is at least 20% lower than the first swath width, while operating in the second mode of operation.

6. The method according to at least one of the preceding claims, insofar as they refer back to Claim 2, **characterized in that**
- a measure for a curvature of the curved section of travel is determined during the processing of the electronic driving data, and
- the second swath width is determined depending on the measure for the curvature.

7. The method according to at least one of the preceding claims, **characterized in that**
- machine data for another agricultural machine intended for a subsequent pick-up of the harvested crop from the swath are provided in the control device, and
- the control device determines the second swath width depending on the machine data.

8. The method according to at least one of the preceding claims, **characterized in that** the controlling of the raking devices (4, 5) in the first and the second mode of operation comprises changing the working position of one or multiple raking devices (4, 5), wherein the one or the multiple raking devices (4, 5) herein are shifted between an elevated, non-working position and a lowered, working position and/or, with respect to the support frame, are shifted between a proximal and a distal working position.

9. The method according to at least one of the preceding claims, **characterized in that** the control device controls the raking devices (4, 5) to collect a third section of the swath, which follows the second swath section, with a third swath width according to a third mode of operation, when the agricultural machine having the rake (1) travels on another essentially straight section of travel which follows the curved section of travel, wherein the third swath width is greater than the second swath width.

10. An arrangement with an agricultural machine having a rake (1) for collecting a harvested crop on agricultural land, in which a combination of raking devices (4, 5) is arranged on a support frame, which raking devices (4, 5) are designed to collect a harvested crop on agricultural land into swaths, and with a control device, wherein the arrangement is configured to be controlled in accordance with a method according to at least one of the preceding claims while collecting the harvested crop into swaths on the agricultural land by means of the agricultural machine.

## Revendications

1. Procédé, destiné à commander une machine agricole lors de l'andainage d'une récolte sur une surface agricole utile, comportant :
- la mise à disposition d'une machine agricole équipée d'un andaineur (1), sur laquelle sur un cadre porteur (3) est placée une association de râtisseurs (4, 5) qui sont aménagés pour andainer une récolte sur une surface agricole utile ;
- le déplacement de la machine agricole avec l'andaineur (1) sur la surface agricole utile, pour andainer la récolte à cet effet ; et
- la commande des râtisseurs (4, 5) en mode andainage au moyen de signaux de commande générés par un système de commande de la machine agricole ;
**caractérisé en ce que**
- pour l'andainage d'une première section d'un andain de la récolte, les râtisseurs (4, 5) sont commandés à une première largeur d'andainage correspondant à un premier mode de fonctionnement, lorsque la machine agricole se déplace avec l'andaineur (1) le long d'un tronçon de voie sensiblement droit ;
- pour l'andainage d'une deuxième section de l'andain, les râtisseurs (4, 5) sont commandés à une deuxième largeur d'andainage, qui est inférieure à la première largeur d'andainage, correspondant à un deuxième mode de fonctionnement, lorsque la machine agricole se déplace avec l'andaineur (1) le long d'un tronçon de voie curviligne ; et
- pour commander les râtisseurs (4, 5), le système de commande traite des données électroniques de déplacement, lesquelles indiquent que la machine agricole entre avec l'andaineur (1) dans le tronçon de voie curviligne et / ou se déplace sur le tronçon de voie curviligne.

2. Procédé selon la revendication 1, **caractérisé par**
- la détermination de premières données électroniques de déplacement, lesquelles indiquent une position momentanée de la machine agricole sur la surface agricole utile, en ce que lors du déplacement de la machine agricole avec l'andaineur (1) sur la surface agricole utile, de manière répétée, des données de position de la machine qui indiquent la position momentanée de la machine agricole sur la surface agricole utile sont déterminées pour la machine agricole au moyen d'un système de détermination de la position ; et
- le traitement des données électroniques de déplacement, pour déterminer si la machine agricole entre avec l'andaineur (1) dans le tronçon de voie curviligne et / ou se déplace sur le tronçon de voie curviligne.

3. Procédé selon la revendication 2 ou 3, **caractérisé par**
- la détermination de deuxièmes données électroniques de déplacement, qui indiquent des informations de pilotage concernant un pilotage de la machine agricole ; et
- le traitement des deuxièmes données électroniques de déplacement, pour déterminer si la machine agricole entre avec l'andaineur (1) dans le tronçon de voie curviligne et / ou se déplace sur le tronçon de voie curviligne.

4. Procédé selon au moins l'une quelconque des revendications précédentes, **caractérisé en ce que** les signaux de commande générés par le système de commande commandent aux râtisseurs (4, 5) de créer l'andain dans la deuxième section d'andain avec une constriction au niveau de la largeur d'andainage.

5. Procédé selon au moins l'une quelconque des revendications précédentes, **caractérisé en ce que** les signaux de commande générés par le système de commande commandent aux râtisseurs (4, 5) de réduire l'andain dans le deuxième mode de fonctionnement jusqu'à une deuxième largeur d'andainage, qui est inférieure d'au moins approximativement 20 % à la première largeur d'andainage.

6. Procédé selon au moins l'une quelconque des revendications précédentes, si elles se réfèrent à la revendication 2, **caractérisé en ce que**
- lors du traitement des données électroniques de déplacement, une dimension est déterminée pour une courbure du tronçon de voie curviligne et
- la deuxième largeur d'andainage est déterminée en fonction de la dimension pour la courbure.

7. Procédé selon au moins l'une quelconque des revendications précédentes, **caractérisé en ce que**
- dans le système de commande sont mises à disposition des données concernant une machine pour une autre machine agricole, qui est prévue pour un ramassage ultérieur de la récolte à partir de l'andain ; et
- le système de commande détermine la deuxième largeur d'andainage en fonction des données concernant la machine.

8. Procédé selon au moins l'une quelconque des revendications précédentes, **caractérisé en ce que** la commande des râtisseurs (4, 5) dans le premier et dans le deuxième modes de fonctionnement comprend une variation de la position de travail d'un ou de plusieurs des râtisseurs (4, 5), à cet effet, l'un ou les plusieurs râtisseurs (4, 5) étant déplacés entre une position relevée de non travail, ainsi qu'une position de travail abaissée et / ou entre une position de travail proximale, ainsi qu'une position de travail distale, en rapport au cadre porteur.

9. Procédé selon au moins l'une quelconque des revendications précédentes, **caractérisé en ce que** pour l'andainage d'une troisième section de l'andain, laquelle se raccorde sur la deuxième section d'andain, le système de commande commande les râtisseurs (4, 5) à une troisième largeur d'andainage correspondant à un troisième mode de fonctionnement, lorsque la machine agricole se déplace avec l'andaineur (1), à la suite du tronçon de trajet curviligne sur un tronçon de trajet droit sensiblement plus large, la troisième largeur d'andainage étant supérieure à la deuxième largeur d'andainage.

10. Ensemble pourvu d'une machine agricole destinée à l'andainage d'une récolte sur une surface agricole utile, lequel comporte un andaineur (1) sur lequel, sur un bâti porteur est placée une association de râtisseurs (4, 5) qui sont aménagés pour andainer une récolte sur une surface agricole utile ainsi qu'un système de commande, l'ensemble étant aménagé pour être commandé d'après un procédé selon au moins l'une quelconque des revendications précédentes, lors de l'andainage de la récolte sur la surface agricole utile au moyen de la machine agricole.
